Europäisches Patentamt

(19) **European Patent Office**

Office européen des brevets

(11) Numéro de publication: **0 122 208**
**B1**

(12) # FASCICULE DE BREVET EUROPEEN

(45) Date de publication du fascicule du brevet:
**19.11.87**

(51) Int. Cl.⁴: **F 16 H 49/00**

(21) Numéro de dépôt: **84420064.2**

(22) Date de dépôt: **06.04.84**

(54) Dispositif de transmission d'un mouvement de rotation entre un arbre menant et un arbre mené.

(30) Priorité: **12.04.83 FR 8306251**

(43) Date de publication de la demande:
**17.10.84 Bulletin 84/42**

(45) Mention de la délivrance du brevet:
**19.11.87 Bulletin 87/47**

(84) Etats contractants désignés:
**AT BE CH DE FR GB IT LI LU NL SE**

(56) Documents cités:
**FR - A - 1 518 051**
**FR - A - 2 248 444**
**US - A - 3 147 640**
**US - A - 3 187 605**
**US - A - 3 453 687**
**US - A - 3 532 005**

(73) Titulaire: **ASSISTANCE INDUSTRIELLE DAUPHINOISE A.I.D., Chemin du Vieux Chêne Z.I.R.S.T., F-38240 Meylan (FR)**

(72) Inventeur: **Danel, François, 21, avenue Jeanne d'Arc, F-38000 Grenoble (FR)**

(74) Mandataire: **Maureau, Philippe, Cabinet Germain & Maureau Le Britannia - Tour C 20, bid Eugène Déruelle Boîte Postale 3011, F-69392 Lyon Cédex 03 (FR)**

ACTORUM AG

## Description

La présente invention a pour objet un dispositif de transmission d'un mouvement de rotation entre un arbre menant et un arbre mené.

Dans de nombreuses applications, il est nécessaire de faire varier la vitesse de rotation entre un arbre menant et un arbre mené, par l'intermédiaire d'un réducteur si la vitesse doit être diminuée, ou d'un multiplicateur si la vitesse doit être augmentée.

Or, la mise en œuvre des réducteurs existants pose des problèmes dans le cas de mécanismes à hautes performances, tels que des robots de manutention, des indexeurs et diviseurs pour la commande numérique, la propulsion d'engins spéciaux tels que des véhicules d'intervention et de surveillance des cuves de réacteurs nucléaires, des treuils, ou des appareils de levage spéciaux. Dans de telles applications, il faut qu'un réducteur possède un faible encombrement et un faible poids, une grande capacité de couple, un faible jeu, un bon rendement, et qu'il procure une forte réduction.

Avec les réducteurs existants, ces impératifs restent souvent inconciliables, les améliorations de pouvant venir que de l'amélioration des tolérances de fabrication et de l'amélioration des caractéristiques des alliages utilisés. Les progrès sont donc limités alors que les coûts de production augmentent rapidement.

Le document US-A 3 187 605 concerne un réducteur comportant une cloche souple qui, portant une denture extérieure, est insérée dans une bague rigide comportant une denture intérieure possédant quelques dents de plus que la cloche. Un dispositif tournant assure le contact entre le cloche et la bague en deux points opposés, et assure la déformation de la cloche au fur et à mesure de son pivotement, mettant en contact les dents de la cloche et de la bague. Au bout d'un tour de rotation, la cloche souple s'est décalée par rapport à la bague extérieure d'un angle égal à celui correspondant à la différence du nombre des dents, respectivement, de la cloche et de la bague.

Les avantages d'un tel réducteur sont essentiellement l'obtention d'un rapport de réduction important avec un seul étage, un bon rendement, et son caractère réversible, puisqu'il peut être utilisé en multiplicateur.

Les inconvénients de ce réducteur résident dans sa difficulté d'usinage, son coût élevé, et dans son encombrement puisqu'il est nécessaire d'avoir une cloche d'une longueur suffisante pour permettre sa déformation et assurer une géométrie correcte pour les dents en contact.

Le document FR-A 2 248 44 décrit un dispositif de transmission du mouvement entre un arbre menant et un arbre mené, comprenant une couronne rigide solidaire d'un boîtier présentant, ménagée dans l'une de ses faces perpendiculaires à son axe, une surface de contact annulaire avec une couronne déformable élastiquement qui, centrée sur le même axe et solidaire en rotation de l'arbre lent, présente une surface de contact annulaire avec la première couronne, de longueur supérieure à celle de la surface de contact avec la première couronne, des moyens solidaires en rotation de l'arbre rapide, assurant un contact sans friction en au moins un point entre la couronne rigide et la couronne flexible, lesdits moyens assurant un contact sans friction entre la couronne rigide et la couronne déformable élastiquement sont constitués par une pièce solidaire en rotation de l'arbre rapide et centrée sur celui-ci, ledit arbre lent comprenant un alésage axial à l'intérieur duquel est monté l'arbre rapide.

Les moyens assurant un contact sans friction entre la couronne rigide et la couronne déformable élastiquement sont constitués par un dispositif d'accouplement constitué par un bras s'étendant radialement au-dessus des deux couronnes et dont l'extrémité recourbée porte des galets prenant appui de part et d'autre des deux couronnes.

Le dispositif selon l'invention, du dernier type cité, comprend, débouchant dans sa face en regard de la couronne flexible, une gorge circulaire dont le fond présente des zones à différentes distances de la couronne rigide, obtenues par modification de la profondeur de la gorge, cette gorge servant au logement de billes régulièrement réparties sur toute sa longueur, qui prennent appui sur la couronne flexible de façon à créer au moins une ondulation sur les 360° qu'elle occupe, et des roulements sont interposés entre l'arbre lent et l'arbre rapide.

Lors de l'entraînement en rotation de l'arbre rapide et de la pièce dans laquelle est ménagée la gorge, il va se produire une modification de la position des points d'appui de la couronne flexible sur la couronne rigide se traduisant par une rotation de l'une par rapport à l'autre. Or, cette modification de la position des points d'appui est fonction des ondulations de la gorge de la pièce entraînée par l'arbre rapide, et non pas de l'entraînement des billes par celle-ci.

Il est donc possible de réaliser le montage des différentes pièces avec une précontrainte axiale importante, permettant la transmission des couples élevés, sans nuire au bon fonctionnement du dispositif.

Ce dispositif peut transmettre un mouvement inverse, agissant alors à la façon d'un multiplicateur, ce qui en fait un appareil réversible.

Les zones de contacts entre la couronne rigide et la couronne flexible sont constituées par des dentures.

Cet appareil présente l'avantage d'être simple à réaliser, puisque les couronnes sont planes, donc facilement démoulables, de ne pas nécessiter de tolérances de fabrication aussi élevées, notamment en ce qui concerne le centrage, que celui comportant des dentures concentriques, de posséder des rapports de réduction pouvant être très élevés, supérieurs à mille, en un seul étage, de posséder une excellente réversibilité, de permettre le rattrapage et la limitation des jeux, du fait du montage coaxial des deux couronnes et d'une possibilité de précontrainte axiale, d'être d'un faible encombrement et de poids réduit, puisque les couronnes sont plates, ce qui est particulièrement avantageux dans l'application à des codeurs ou à des plateaux-diviseurs. Ce variateur est également débrayable par déplacement axial de l'une des deux couronnes.

Avantageusement, les surfaces de contact entre les deux couronnes sont situées à proximité des bords respectifs de celles-ci les plus éloignés de l'axe de l'appareil, ce qui procure un fort couple de rotation.

Si l'appareil est susceptible de très nombreuses applications, il est, en raison de sa structure et de sa compacité, particulièrement bien adapté pour son montage dans des robots.

Avantageusement, les billes disposées entre la couronne flexible et la pièce entraînée par l'arbre rapide et dans laquelle est ménagée une gorge, sont régulièrement réparties sur toute la longueur de celle-ci.

Il en résulte un appui des billes sur toute la périphérie de la couronne flexible, la rigidifiant et évitant les déformations parasites.

Dans ce dernier cas, les billes sont montées à l'intérieur d'une cage indépendante de la pièce dans laquelle est ménagée une gorge.

Cette cage évite les contacts entre deux billes adjacentes, pouvant perturber les mouvements de celles-ci.

Selon une forme d'exécution de ce dispositif, les ondulations que forme le fond de la gorge ménagée dans la pièce solidaire en rotation de l'arbre rapide sont obtenues par modification de la profondeur de la gorge.

Avantageusement, la pièce solidaire en rotation de l'arbre rapide possède une partie extérieure en forme de couronne, dans une des faces de laquelle est ménagée la gorge servant au logement des billes prenant appui sur la couronne flexible, et dans la face opposée de laquelle est ménagée une autre gorge, dont le fond est à distance constante d'une paroi de la partie fixe du dispositif, et qui sert de logement à une série de billes prenant appui contre la partie fixe considérée du dispositif.

Cet agencement permet de diminuer l'inertie du système et limite la poussée axiale sur les roulements.

Selon une forme d'exécution de l'invention, l'arbre lent comprend un alésage axial à l'intérieur duquel est monté, avec interposition de roulements, l'arbre rapide.

Cet agencement est intéressant car permettant le montage des deux arbres rapide et lent, soit de part et d'autre du boîtier, soit du même côté de celui-ci.

De toute façon, l'invention sera bien comprise à l'aide de la description qui suit, en référence au dessin schématique annexé représentant, à titre d'exemples non limitatifs, plusieurs formes d'exécution de ce dispositif:

Figure 1 est une vue en coupe longitudinale d'un premier dispositif;

Figure 2 est une vue en perspective éclatée des principaux éléments constitutifs de celui-ci;

Figure 3 est une vue en coupe longitudinale et en position développée, de la pièce solidaire de l'arbre rapide et des couronnes flexible et rigide;

Figure 4 est une vue en coupe longitudinale d'un second dispositif;

Figure 5 est une vue en coupe longitudinale d'un dispositif constituant une variante de celui de figure 1.

Figure 6 est une vue en coupe longitudinale d'un autre dispositif.

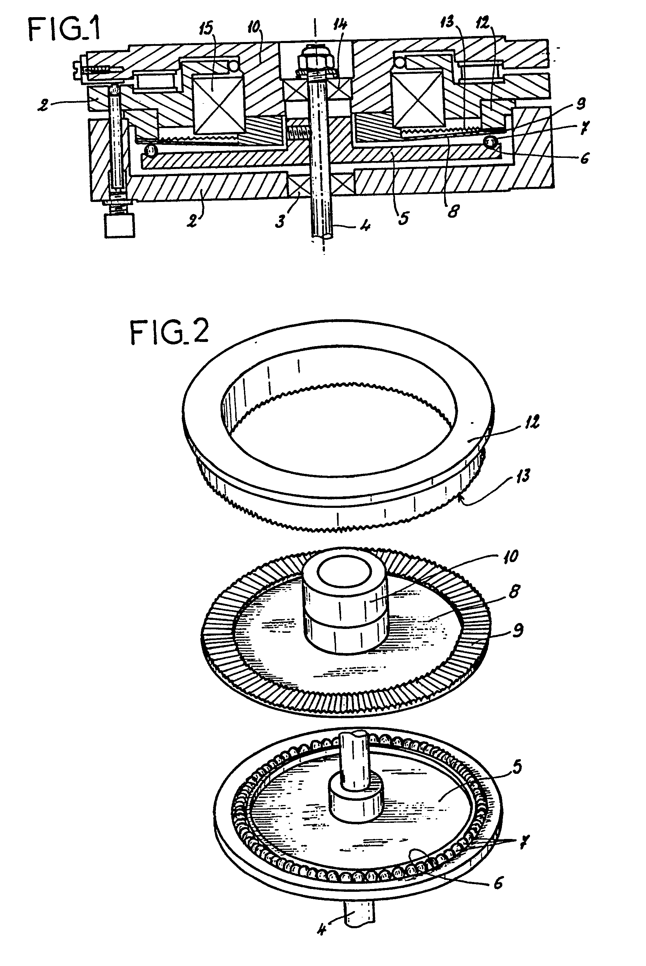

Le dispositif représenté en coupe à la figure 1 comprend un corps (2) réalisé en plusieurs pièces constituant la partie fixe. A l'intérieur de ce corps est monté, avec interposition d'un roulement (3), un arbre (4), désigné ci-après par le terme arbre menant ou arbre rapide. Sur l'arbre (4) est fixée une pièce (5) présentant une symétrie de révolution, dont la partie extérieure forme une couronne dans l'une des faces de laquelle est ménagée une gorge (6). Cette gorge (6) sert au guidage de billes (7).

Du côté de la pièce (6) duquel se trouvent les billes (7), est disposé un disque (8) réalisé en une matière souple, et présentant à sa périphérie une couronne dentée (9). Ce disque (8), qui est coaxial à la pièce (5), est solidaire en rotation de l'arbre lent ou arbre mené (10). En regard de la couronne flexible (9), est disposée une couronne rigide (12) solidaire du corps (2). Cette couronne (12) présente une denture (13) dont le nombre de dents est légèrement inférieur au nombre de dents de la couronne flexible (9).

L'arbre lent (10) est monté entre l'arbre rapide (4) et le corps (2) avec interposition de roulements (14) et (15).

Comme cela ressort du dessin, le fond de la gorge (6) ne se trouve pas à une distance constante de la couronne rigide (12), la profondeur de la gorge étant variable, de telle sorte que le fond de celle-ci forme des ondulations (16) au nombre d'au moins une sur la longueur de la gorge.

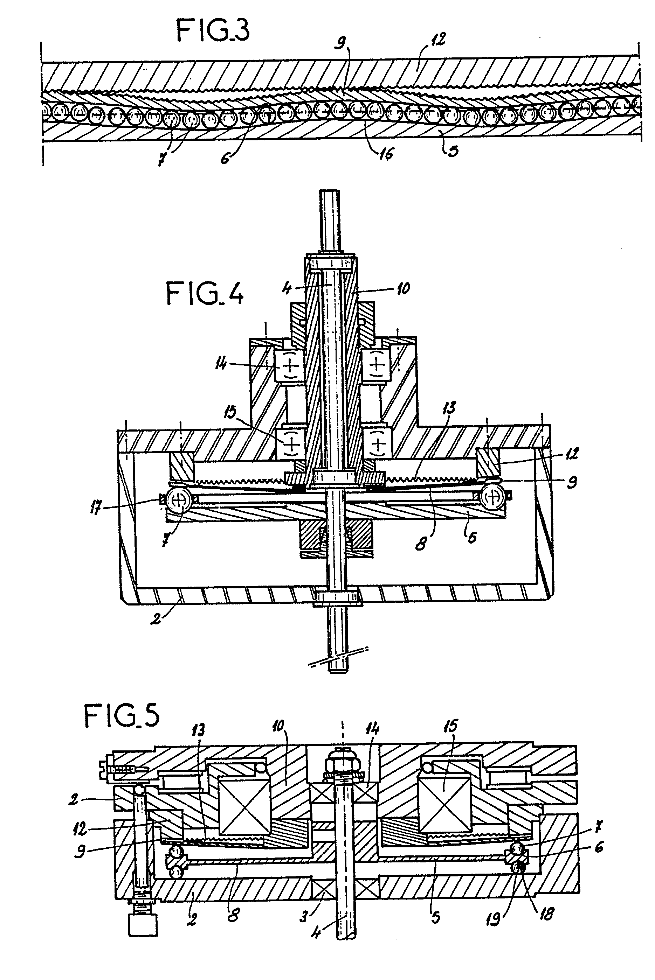

Les billes (7) qui, dans la forme d'exécution représentée au dessin, sont jointives, peuvent être séparées les unes des autres par une cage (17), indépendante de la pièce (5), comme cela est montré à la figure 4.

D'un point de vue pratique, lorsque la pièce (5) est entraînée en rotation par l'arbre rapide (4), les ondulations (16) de la gorge (6) vont réaliser des appuis ponctuels de la couronne flexible (9) sur la couronne rigide (12), ces appuis se déplaçant au fur et à mesure de la rotation de l'arbre rapide.

Du fait de la réaction des dents de la couronne rigide (12), lorsque l'arbre rapide aura pivoté d'un tour, le disque souple (8) et l'arbre lent (10) auront pivoté d'un angle égal à celui correspondant à la différence du nombre de dents entre la couronne (12) et la couronne (9).

Il est à noter que le contact entre les couronnes rigide et flexible est conditionné par le seul mouvement de la pièce (5), et non pas par le mouvement de billes (7). Peu importe donc que les billes soient entraînées ou non par la pièce (5) à la même vitesse que celles-ci. Les ondulations que présente la gorge (6) ménagée dans la pièce (5) ne sont pas nécessairement régulières, leurs forme étant adaptée pour maîtriser parfaitement les zones de contact entre les couronnes rigide (12) et flexible (9). Il est donc possible de réaliser le montage du dispositif avec une précontrainte axiale importante évitant tout risque de jeu, sans nuire au fonctionnement de celui-ci et en permettant la transmission de couples de valeur élevée. En outre, l'ensemble possède une grande raideur élastique puisque le disque et la couronne flexible (9) travaillent dans un plan et sont rigidifiés par la série de billes (7).

Il est également intéressant d'utiliser la pièce (5) comme codeur, celle-ci comportant, à cet effet, des gravures ou autres repères permettant l'utilisation de détecteurs de divers types: optiques, magnétiques, électroniques...

Il ressort également du dessin que la structure de ce dispositif assure une séparation des pièces rapides et des pièces lentes, permettant d'utiliser des moyens de lubrification différents dans le deux cas.

La figure 4 représente une variante du dispositif de figure 1, dans laquelle les mêmes éléments sont désignés par les mêmes références, qui met en évidence la possibilité d'une disposition concentrique de l'arbre rapide (4) et de l'arbre lent (10), qui peuvent être situés du même côté de l'appareil, comme montré en partie haute du dessin ou de part et d'autre de celui-ci, comme montré en partie basse.

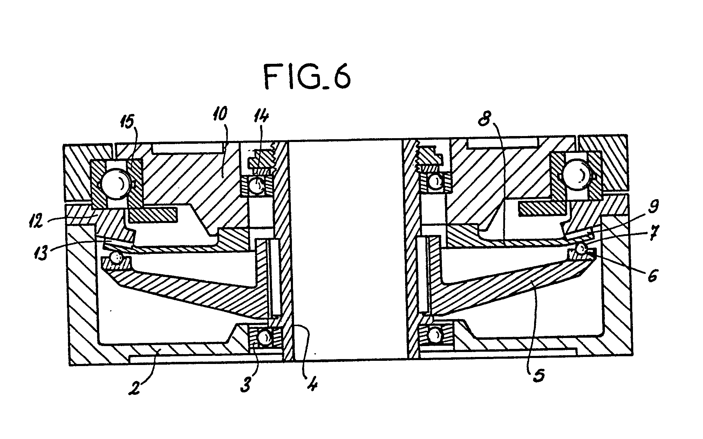

La figure 5 représente une variante du dispositif de figure 1, dans laquelle la pièce (5) présente, dans sa face opposée à celle dans laquelle est ménagée la gorge (6), une gorge circulaire (18) de profondeur constante, servant au logement d'une série de billes (19) prenant également appui contre la paroi en regard du support (2).

Cet agencement est intéressant car permettant de diminuer l'inertie et d'éviter les porte-à-faux se traduisant par une poussée axiale sur les roulements.

La figure 6 représente un autre dispositif, dans laquelle les mêmes éléments sont désginés par les mêmes références que précédemment. Ce dispositif diffère essentiellement des précédents en ce que l'arbre rapide (4) est creux, et en ce que la pièce (5), solidaire de celui-ci et comportant une gorge (6) pour des billes (7), possède une forme conique, la partie de la pièce située au niveau de l'arbre d'entraînement étant plus éloignée du plan de la couronne rigide (12) que la zone dans laquelle est ménagée la gorge (6).

Cette structure permet de renforcer la résistance de la pièce aux contraintes axiales. Ceci est particulièrement intéressant, notamment dans le cas où la pièce (5) comporte une partie centrale allégée, en vue de diminuer son inertie, et une piste réalisée en un matériau résistant, dans laquelle est ménagée la gorge (6).

Comme il ressort de ce qui précède, l'invention apporte une grande amélioration à la technique existante en fournissant un dispositif de transmission de mouvement entre un organe menant et un organe mené, qui est réversible, compact, facile à réaliser puisque son montage est réalisé par empilement de pièces sans réglage, que les pièces sont faciles à usiner, permettant un montage étanche, évitant les jeux en raison de la précontrainte axiale des différentes pièces, permettant la transmission de couples importants, et permettant une réalisation intégrée d'articulations de robots avec peu de course mécanique et électrique, et intégration d'un codeur.

Comme il va de soi, l'invention ne se limite pas aux seules formes d'exécution de ce dispositif, décrites ci-dessus à titre d'exemples.

C'est ainsi que les ondulations du fond de gorge de la pièce (5) solidaire de l'arbre rapide (4) pourraient résulter d'une mise en forme spécifique de ladite pièce, ou que le nombre de billes (7) disposées entre la pièce (5) et la couronne flexible (9) pourrait être différent, les billes n'étant pas jointives, sans que l'on sorte pour autant du cadre de l'invention.

## Revendications

1. Dispositif de transmission de mouvement entre un arbre menant et un arbre mené, du type comprenant une couronne rigide (12) solidaire d'un boîtier (2) présentant, ménagée dans l'une de ses faces perpendiculaires à son axe, une surface de contact annulaire avec une couronne (9) déformable élastiquement qui, centrée sur le même axe et solidaire en rotation de l'arbre lent (10), présente une surface de contact annulaire avec la première couronne (12), de longueur supérieure à celle de la surface de contact avec la première couronne, des moyens solidaires en rotation de l'arbre rapide, assurant un contact sans friction en au moins un point entre la couronne rigide et la couronne flexible, lesdits moyens (6, 7) assurant un contact sans friction entre la couronne rigide (12) et la couronne (9) déformable élastiquement sont constitués par une pièce (5) solidaire en rotation de l'arbre rapide (4) et centrée sur celui-ci, ledit arbre lent (10) comprenant un alésage axial à l'intérieur duquel est monté l'arbre rapide, caractérisé en ce que ladite pièce (5) comprend, débouchant dans sa face en regard de la couronne flexible, une gorge circulaire (6) dont le fond présente des zones à différentes distances de la couronne rigide (12), obtenues par modification de la profondeur de la gorge, cette gorge servant au logement de billes (7) rérulièrement répartiees sur toute sa longueur, qui prennent appui sur la couronne flexible de façon à créer au moins une ondulation sur les 360° qu'elle occupe, et des roulements sont interposés entre l'arbre lent et l'arbre rapide.

2. Dispositif selon la revendication 1, caractérisé en ce que les billes sont montées à l'intérieur d'une cage (17) indépendante de la pièce dans laquelle est ménagée une gorge.

3. Dispositif selon l'une quelconque des revendications 1 et 2, caractérisé en ce que la pièce (5) solidaire en rotation de l'arbre rapide possède une partie extérieure en forme de couronne, dans une des faces de laquelle est ménagée la gorge (6) servant au logement des billes (7) prenant appui sur la couronne flexible (9), et dans la face opposée de laquelle est ménagée une autre gorge (18), dont le fond est à distance constante d'une paroi de la partie fixe (2) du dispositif, et qui sert de logement à une série de billes (19) prenant également appui contre la partie fixe considérée du positif.

4. Dispositif selon l'une quelconque des revendications 1 à 3, caractérisé en ce que la pièce (5) solidaire en rotation de l'arbre rapide (4) possède une forme conique, la partie de la pièce située du côté de l'arbre (5) étant plus éloignée du plan de la couronne rigide (12) que la zone dans laquelle est ménagée la gorge (6) servant de logement aux billes (7) prenant appui sur la couronne flexible.

**Patentansprüche**

1. Vorrichtung zum Übertragen der Bewegung zwischen einer Antriebsachse und einer Abtriebsachse, des Types beinhaltend einen starren, fest mit einem Gehäuse (2) verbundenen Kranz (12), der, angeordnet in einer seiner senkrecht zu seiner Achse liegenden Flächen, eine ringförmige Kontaktfläche mit einem elastisch deformierbaren Kranz (9) aufweist, der, zentriert auf der gleichen Achse und drehfest mit der langsamen Achse (10) verbunden, eine ringförmige Kontaktfläche mit dem ersten Kranz (12) aufweist, deren Länge grösser ist als die Kontaktfläche mit dem ersten Kranz, ferner drehfest mit der schnellen Achse verbundene Mittel, die einen reibfreien Kontakt an mindestens einem Punkt zwischen dem starren Kranz und dem flexiblen Kranz gewährleisten, wobei die genannten Mittel (6, 7), die einen reibfreien Kontakt zwischen dem starren Kranz (12) und dem elastisch deformierbaren Kranz (9) gewährleisten, durch ein Teil (5) gebildet sind, das drehfest mit der schnellen Achse (4) verbunden und auf dieser zentriert ist, wobei die genannte langsame Achse (10) eine axiale Bohrung aufweist, in derem Inneren die schnelle Achse montiert ist, dadurch gekennzeichnet, dass das genannte Teil (5), mündend auf seiner dem flexiblen Kranz gegenüberliegenden Fläche, eine kreisförmige Rille (6) aufweist, deren Grund Zonen unterschiedlicher Abstände von dem starren Kranz (12) aufweist, erhalten durch Modifikationen der Tiefe der Rille, wobei diese Rille der Aufnahme von gleichförmig über ihre ganze Länge verteilten Kugeln (7) dient, die sich auf dem flexiblen Kranz derart abstützen, dass sie mindestens eine Achse auf den 360°, die sie einnehmen, bilden, und das Wälzlager zwischen der langsamen Achse und der schnellen Achse angeordnet ist.

2. Vorrichtung nach Anspruch 1, dadurch gekennzeichnet, dass die Kugeln im Inneren eines Käfigs (17) montiert sind, der unabhängig von dem Teil ist, in dem eine Rille vorgesehen ist.

3. Vorrichtung nach einem der Ansprüche 1 und 2, dadurch gekennzeichnet, dass das drehfest mit der schnellen Achse verbundene Teil (5) einen äusseren Abschnitt in Form eines Kranzes besitzt, in dessen einer Fläche die der Aufnahme der sich auf dem flexiblen Kranz (9) abstützenden Kugeln (7) dienende Rille (6) vorgesehen ist und in dessen gegenüberliegender Fläche eine weitere Rille (18) vorgesehen ist, deren Grund einen konstanten Abstand zu einer Wand des feststehenden Teiles (2) der Vorrichtung aufweist und die der Aufnahme einer Reihe von Kugeln (19) dient, die sich auch gegen den betroffenen ortsfesten Teil der Vorrichtung abstützen.

4. Vorrichtung nach einem der Ansprüche 1 bis 3, dadurch gekennzeichnet, dass das drehfest mit der schnellen Achse (4) verbundene Teil (5) eine konische Form hat, wobei der angrenzend zu der Achse (4) liegende Bereich des Teiles weiter entfernt von der Ebene des starren Kranzes (12) ist als die Zone, in der die Rille (6) vorgesehen ist, die der Aufnahme von sich an dem flexiblen Kranz abstützenden Kugeln (7) dient.

**Claims**

1. A device for transmitting movement between a driving and a driven shaft, of the type comprising a rigid crown wheel (12) firmly attached to a casing (2) and presenting a surface, arranged in one of its faces perpendicular to its axis, that makes annular contact with an elastically-deformable crown wheel (9) that, centred on the same axis and locked to the rotation of the slow shaft (10), presents an annular contact surface with the first crown wheel (12) of greater length than that of the contact surface of the first crown wheel, means locked to the rotation of the fast shaft that ensure fricionless contact between the rigid crown wheel and the flexible crown wheel at at least one point, the said means (6, 7) that ensure frictionless contact between the rigid crown wheel (12) and the elastically-deformable crown wheel (9) consisting of a component (5) locked to the rotation of the last shaft (4) and centred on it, the said slow shaft (10) comprising an axial bore in the interior of which the fast shaft is mounted, characterized in that the said component (5) comprises a circular groove (6) in its surface facing the flexible crown wheel, the bottom of the groove having zones that are at different distances from the rigid crown wheel (12), being obtained by modification of the depth of the groove, this groove serving as a housing for balls (7) regularly spaced along the whole of its lenght that press against the flexible crown wheel in such away as to create at least one undulation in the 360° that it occupies, and bearings are interposed between the slow and fast shafts.

2. A device according to Claim 1, characterized in that the balls are mounted inside a cage (17) independent of the component in which a groove is provided.

3. A device according to one of Claims 1 and 2, characterized in that component (5) locked to the rotation of the fast shaft possesses an external portion in the form of a crown wheel, in one of the faces of which the groove (6) that serves to house the balls (7) that press against the flexible crown wheel (9) is provided, and in the other face of which another groove (18) is provided, the base of which is at a constant distance from one wall of the casing (2) of the appliance, and which serves as housing for a series of balls (19) that similarly press against the casing in question of the device.

4. A device according to any of Claims 1 to 3, characterized in that the component (5) locked to the rotation of the fast shaft (4) is of conical shape, the portion of the component adjacent to the shaft (4) being more distant from the plane of the rigid crown wheel (12) than is the zone in which the groove (6) is provided that houses the balls (7) pressing against the flexible crown wheel.

FIG.1

FIG.2

0 122 208

# FIG.3

# FIG.4

# FIG.5

# FIG.6